# EUROPEAN PATENT APPLICATION

(11) **EP 2 314 540 A1**
(43) Date of publication of application: **27.04.2011**
(21) Application number: 10013853.6
(22) Date of filing: 21.10.2010
(51) Int. Cl.: B67D 3/00, B67D 3/02

(54) **Device for dispensing liquids**

(30) Priority: 22.10.2009 ES 200902059
(71) Applicant: Zumex Maquinas Y Elementos, S.A., 46113 Moncada Valencia (ES)
(72) Inventor: Aparici Ballester, Carlos, 46007 Valencia (ES)
(74) Representative: Soler Lerma, Santiago

(57) **Abstract**

Device for dispensing liquids based on the swivelling motion of a main arm (3) which, together with the pivoting motion of a secondary internal arm (6) provided with valve elements, (9) determines the opening or closing of two orifices, a first one (2) that connects the container (1) of the liquid and a pan (4) and a second one (5) that connects said pan (4) to the exterior, having means for guaranteeing the sequenced opening and closing of the two orifices, preventing dripping and spilling.

## Description

The present invention relates to a device for dispensing liquids, one of the advantages of which, in addition to its simplicity and low cost, is its perfect closure, preventing undesired dripping, as well as the ease of dismantling and washing its main components, which makes it particularly useful for installation in machines used to make or dispense drinks, especially those intended for use in the restaurant or self-service sector, an example of which being automatic fruit squeezers.

### BACKGROUND OF THE INVENTION

Machines for preparing or dispensing drinks are widely known. Some common ones that can be used to explain the prior art by way of example are orange squeezers used in restaurants, where it is convenient to prevent taps from dripping for both hygiene and appearance reasons.

A common solution is to collect the dripping liquid in a container. However, the consumer may then doubt whether the juice served as fresh juice exclusively consists of that which has been freshly squeezed, or if instead it is a mixture of the fresh juice and that collected in said container, discouraging its consumption.

Some machines have been provided with anti-drip taps of the type comprising a main spout and an outlet spout perpendicular to the main spout in which the closing valve and actuation lever are inserted. However, this type of tap generally occupies considerable space, generally jutting out from the machine; moreover, taps of this type are difficult to dismantle and clean and have high manufacturing costs.

In addition, in order to make use of gravity in the operation of the machines, the taps are generally located on the bottom half of the machine, so that if a tap as that described above is added it becomes difficult to fill containers having a certain height, requiring to raise the machines with an additional structure that not only compromises their stability and increases their price, but also generates an empty area that is difficult to reach for cleaning.

No patents are known of that disclose technical solutions similar to those object of this document, so that the brief description of the prior art refers to that which is common in the sector at the present time, without having any references of uses or devices similar to the one disclosed herein.

### DESCRIPTION OF THE INVENTION

The invention proposed relates to a device for dispensing liquids.

The device comprises:
- A fixed element on which the mobile elements are mounted.
- A container or channel, hereinafter referred to as the container, that contains the liquid to dispense and is provided with an orifice to allow the liquid to exit.
- A main swivelling arm, which in turn comprises:
   o Means allowing it to swivel.
   o A receptacle or pan with a perforated base, suitable for collecting the liquid that flows from the container.
   o Inside said pan, a secondary pivoting arm bearing on its end valve elements for closing the orifice in the pan base and the orifice through which the liquid flows from the container, the path described by this secondary pivoting arm being limited by two stops.
   o Means for acting on said main arm to make it swivel.
- Means for forcing at least the anterior part of the main arm to rise as much as possible, these means optionally included in the main arm itself.
- Means for keeping the anterior part of the main arm separated from the aforementioned orifice.
- Optionally, an jar with a shelf at an adjustable height.

With the main elements as defined above, the device acts as follows, with its action defined in three stages: initial, intermediate and final.

In the initial phase the liquid is inside the container provided with an outlet orifice.

In this closed position, the main arm or at least its anterior part in which the pan is located is at its highest position, forced by elastic means.

At this position it is near the outlet orifice of the container and the secondary pivoting arm is trapped such that the valve elements incorporated on its end close both the outlet orifice of the container and the orifice made in the base of said pan.

The arm maintains this position applying the appropriate pressure due to the action of elastic elements, such as some springs.

When the main arm is made to swivel its anterior part with the pan moves down.

In this intermediate stage the secondary pivoting arm is separated from the base of the pan, but keeps the outlet orifice of the container closed by the action of some elastic means, such as a spring, which keep it pressed against said orifice.

As described, when the main arm is lowered, in the first part of its path the lower orifice of the pan will be opened but the outlet orifice of the container will be closed.

After a certain point in the motion of the main arm its shape makes it contact the secondary pivoting arm, making it move down and thereby opening the liquid outlet orifice of the container, from where the liquid falls into the pan that directs it towards its base and through its orifice flows to its exterior.

In the final stage the main arm has completed its downward motion and the secondary pivoting arm is trapped in an intermediate position between the stop determined by the shape of the main arm, which prevents it from moving up, and a safety stop that prevents it from moving down, at this time both the orifice of the container and that of the pan being open, as the valve element is at an intermediate point and separated from both orifices.

If the outlet orifice of the container is opened before the orifice in the base of the pan, the liquid would flood it, possibly causing it to overflow.

To ensure that this does not occur a stop is provided that detains the secondary pivoting arm if it starts moving down together with the main arm and which acts as a stop in its downward motion.

This ensures that the lower orifice of the pan will open when the main arm continues moving down, while the secondary pivoting arm is stopped by the action of the stop.

When no more pressure is applied on the main arm, it will return to the position of the initial stage due to the force exerted by the elastic means provided.

The present invention is meant to provide a versatile tap that can be operated in different ways.

One operation mode can involve applying pressure directly on the tab or lip that it may incorporate, requiring the user to maintain this position of the device during the supply.

Another mode of operation involves inserting an accessory object, such as a glass or pitcher with the appropriate height for pressing upward on the rear part of the main arm, making its anterior part move down if the swivelling axis is at an intermediate position of the main arm.

Another mode of operation, suitable for any type of pitcher or glass as it does not require it to have a specific height, involves pushing an actuation lever provided for this purpose and which can be retracted when it will not be used.

Also foreseen is the inclusion of an eccentric part which, when it turns, makes the anterior part of the main arm move down, keeping it down until the user decides, and which may incorporate recovery means.

In general, it is possible to act on the device in any way that makes it possible to vary the position of the main arm in order to achieve the stages described above.

In addition, to make full use of the possibilities offered by this type of device, it can optionally comprise a jar suitable for containing within it the container to be filled.

The jar can be defined by two differentiated segments, a first segment configured or inserted in the body of the machine in which the device is installed, and a second segment, which complements the first one and constitutes a lower extension thereof, configured or inserted in the piece of furniture that supports said machine.

This jar can include a system of grooves at different heights so that, depending to the height of the container to be filled, it is possible to place a tray at the optimum height for supporting said container.

A series of figures are provided meant to aid the understanding of the invention.

### BRIEF DESCRIPTION OF THE DRAWINGS

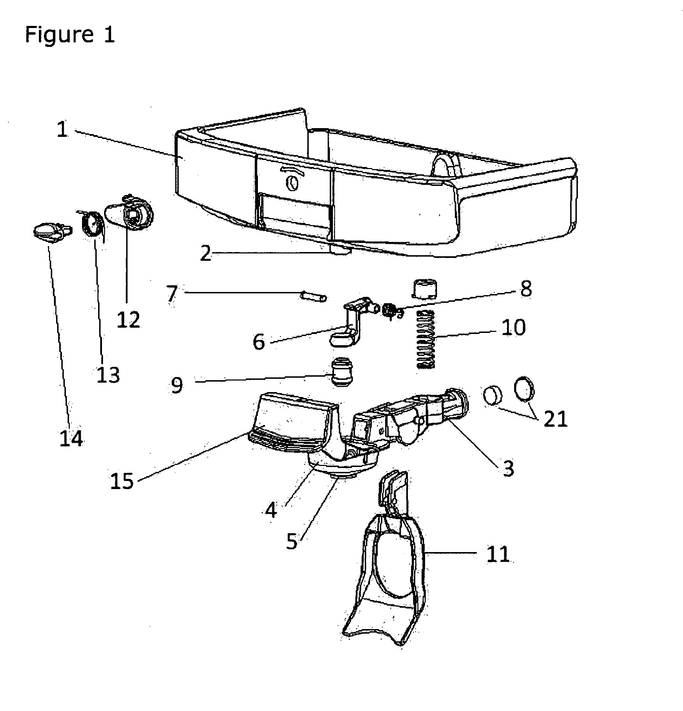

FIGURE 1 shows an exploded view of the basic elements of the dispensing device; it represents the liquid container (1) with its exit orifice (2), the main arm (3) incorporating the pan (4) with its lower exit orifice (5), the secondary pivoting arm (6), the shaft about which it pivots (7), the elastic element, in this case a spring, that pushes it upward (8), the plug configured by the valve elements (9), the means for maintaining the position of the main arm, in this case a spring (10), the push lever (11) and the eccentric part (12) that allow pushing and securing the main arm in a given position, with its recovery means, in this case a spring (13), and the gripping means used to handle it (14), as well as the tab (15) that juts out of the main arm allowing the user to comfortably open the tap, also showing a set of magnets (21) that move with the main arm in order to turn on or off the machine in which the device is installed.

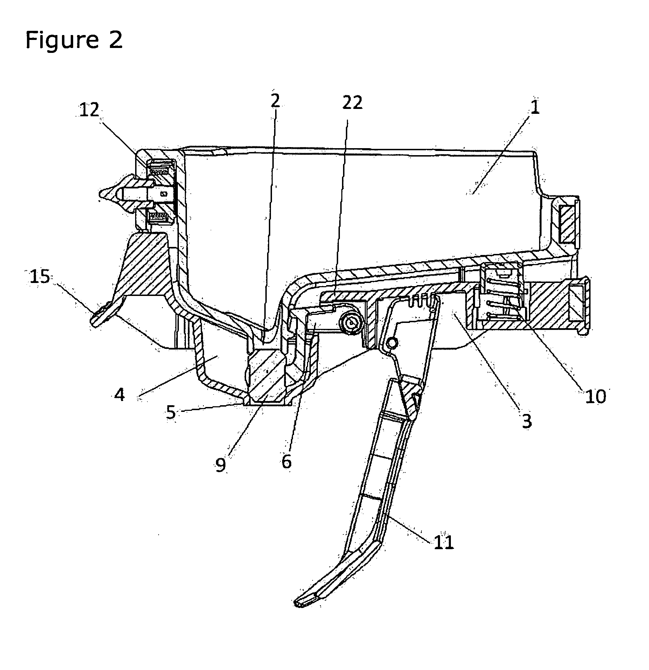

FIGURE 2 shows a cross section of the main elements of the device in the initial stage, with the container (1) and its exit orifice (2), the elastic elements (10) that force the position of the main arm (3), the pan (4) and its exit orifice (5), the secondary pivoting arm (6) on the end of which is the valve piece (9), which in this case is trapped between the orifices (2) and (5) and therefore is closing both, and also other elements such as the tab (15), the push lever (11) or eccentric part (12), all of which act on the main arm, and the shape (22) which acts as a stop to ensure that the secondary pivoting arm is carried downward when necessary.

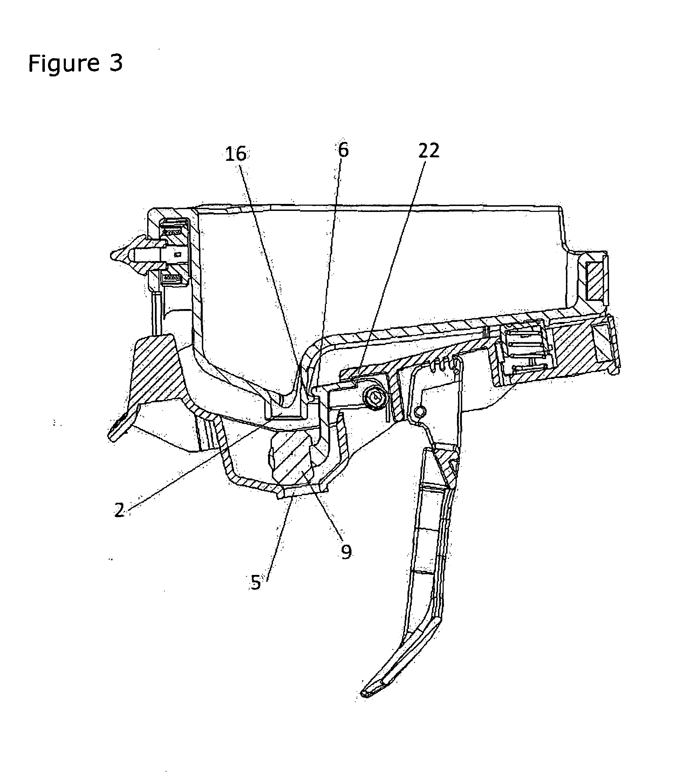

FIGURE 3 also shows a cross section of the main elements of the device, in this case corresponding to the position of the final stage, in which the valve elements (9) are no longer closing the exit orifice of the container (2) nor that of the pan (5) and the main arm is separated from the container in its anterior part and is close to it in its rear part, showing how the secondary pivoting arm (6) has been stopped by a protrusion of the container (16) when carried down by the shape (22) of the main arm.

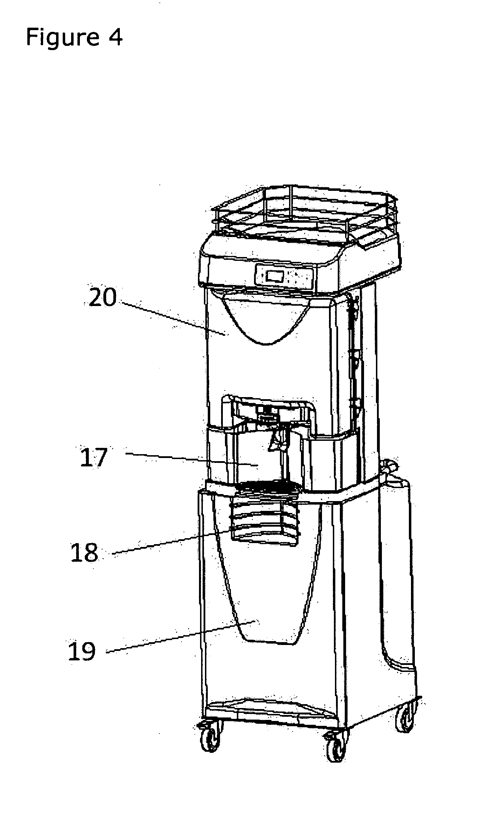

FIGURE 4 shows a perspective view of a machine (20) in which the device has been installed, in this case with the jar (17) and its prolongation in the piece of furniture that supports said machine (19), showing the grooves (18) allowing to insert at the desired height a tray for supporting the container to be filled.

### DESCRIPTION OF AN EMBODIMENT OF THE INVENTION

A description is given below of a possible embodiment of the invention, which is not unique, so that the scope of protection should extend to all embodiments sharing the technical solutions claimed.

An example will be described of a device installed in a juice machine for restaurants, of the type comprising a squeezing group and a contained in a lower position into which the juice falls, wherein such a device comprises:
- A fixed element that supports the main swivelling arm (3), this fixed element consisting of the lower part of the container (1) itself.
- A main swivelling arm (3), which in turn comprises:
   o A horizontal shaft about which it swivels.
   o A funnel-shaped receptacle or pan (4) vertically aligned with the outlet orifice of the container (2), this pan having an orifice (5) in its base.
   o A valve element consisting of a part of soft material (9) with a cylindrical shape, the ends of which are tapered and have a suitable radius for closing, in each case, the outlet orifice of the container (2) and the outlet orifice of the base of the pan (5), this part being connected to a secondary pivoting arm (6), the shaft (7) of which is inserted in the main swivelling arm, the motion of said secondary pivoting arm being conditioned by both a spring joined to its shaft (8) which pushes the secondary pivoting arm upward and by the motion of the main arm, and being limited by the upper (22) and lower (16) stops.
   o Support means for acting on the main arm (15).
   o A retractable lever in the shape of a perforated scoop joined to the main arm by a shaft that allows it to reach a horizontal position, concealed in the shape of the arm itself, or a vertical position transmitting to the main arm the force exerted backward on it.
   o Magnets (21) that move with the main arm and turn on or turn off the machine in which the device is installed.
   o A spring (10) inserted in the rear part of the main arm that tends to separate this part of said arm from the container, such that its anterior part is brought towards the container.
- In the body of the container and at a position above the anterior end of the main arm is disposed an eccentric part (12) with a horizontal shaft which, when it turns, drives and pushes down the anterior part of the main arm, this part being provided with recovery means (13), specifically a spring, such that once turned it remains at its position due to the upward pressure applied by the main arm and when released from this pressure, even if only for a moment, the eccentric part returns to its original position.
- A jar divided into two differentiated parts, an upper part configured by a recess made in the body of the machine itself in which the swivelling arm is installed, and a lower part embedded in or forming part of the piece of furniture that supports the machine, this lower part being provided with lateral grooves for inserting a suitable tray at the required height.

The operation of the device thereby configured is as explained below.

In its initial position, the anterior part of the main arm pushes against the container (1) due to the force exerted by the spring (10) provided in its rear part.

At this position, the valve element (9) mounted on the secondary pivoting arm (6) is trapped and closes both the outlet orifice of the container (2) and the outlet orifice of the jar (5).

At an intermediate time, when a suitable pressure is exerted on the main arm, the anterior part of this arm begins to move down, but the valve element (9) still closes the outlet orifice of the container (2) due to the action of a spring (8) provided on the shaft of the secondary pivoting arm, while the orifice on the base of the pan (5) is open.

To ensure that the outlet orifice of the container opens, the shape of the main arm (22) is such that, beyond a certain point, it carries down with it the secondary pivoting arm.

There are endless ways to exert pressure on the main arm; the embodiment described specifically foresees the following:
- Manually applying a downward vertical pressure on the tab (15).
- Pushing on the lever (11), for example with a container, causing the main arm to move down.
- With said lever retracted, inserting a container with the appropriate height to push up on the rear part of the main arm.
- Turning the eccentric piece (12) located on the anterior part of the main arm.

If for any reason the secondary pivoting arm starts moving down together with the main arm, such as because it breaks, the spring malfunctions or the juice has made it sticky, a tab (16) is provided as a stop to prevent the secondary pivoting arm to move below a certain point, ensuring that the lower orifice of the pan (5) will always open.

At a final moment the anterior part of the main swivelling arm (3) is at a certain distance from the container and the valve piece (9) is suspended within the pan, maintaining its position as the secondary pivoting arm (6) is trapped between its stops (16) and (22), so that both the outlet orifice of the container (2) and the outlet orifice of the pan (5) are open, allowing the juice to reach the exterior.

To cut off the supply the stages proceed in the inverse order; the anterior part of the main swivelling arm initiates an upward motion, followed by the secondary pivoting arm, which is forced up by the spring (8) so that in its motion the valve piece first closes the outlet orifice of the container, subsequently being trapped and also closing the orifice of the pan base.

The motion of the rear part of the main arm has been used to install a system, in this case a series of magnets, to automatically turn on and off the juice-making machine.

One of the advantages of this device is the small space requirements, as it does not protrude beyond the base surface of the machine in which is installed and uses a minimal vertical space.

In view of the above description, the device is completed with a jar in which the main arm occupies the upper part, this jar being suitable for housing the container to be filled.

This jar, which can even be prolonged in the piece of furniture that supports the machine, is provided with lateral grooves such that it is possible to insert a tray at a different height depending on the size of the container to be filled.

## Claims

1. **DEVICE FOR DISPENSING LIQUIDS** of the type based on opening or closing the outlet orifices of the liquid arriving from a container, which is considered to include the conducts, by means of the pressure exerted by one or more valve pieces, **characterised in that** it comprises:
A main arm that swivels about a horizontal shaft, this main arm comprising a pan with an orifice in its base that receives the liquid flowing through the outlet orifice of the container, and inside it a second pivoting arm provided with means for directing and limiting its motion that bears a valve element;
Means for forcing the main swivelling arm to remain with its anterior part as raised as possible;
Means for acting on said main swivelling arm to change its position;
A support element for the main swivelling arm;
And optionally comprising a jar with a variable height and sufficient size to house the container to be filled.

2. **DEVICE FOR DISPENSING LIQUIDS** according to claim 1, **characterised in that** the secondary pivoting arm comprises elastic means that tend to raise the end in which the valve element is located.

3. **DEVICE FOR DISPENSING LIQUIDS** according to the previous claim, **characterised in that** the path of the secondary pivoting arm is limited by two stops, the lower stop (16) being fixed and the upper stop (22) being mobile and moving together with the main arm.

4. **DEVICE FOR DISPENSING LIQUIDS** according to the previous claims, **characterised in that** the valve element on the secondary pivoting arm has a cylindrical body and upper and lower bases having a tapered shape, with a size and orientation allowing to close respectively the outlet orifices of the container and the orifice provided on the base of the pan.

5. **DEVICE FOR DISPENSING LIQUIDS** according to the previous claims, **characterised in that** the means for forcing the position of the main arm comprise a spring located between the part rearward of the axis of said main arm and the support element.

6. **DEVICE FOR DISPENSING LIQUIDS** according to the previous claims, **characterised in that** the means allowing the main arm to swivel are at least one from among: a tab in the form of a lip protruding from the anterior part; a lower scoop-shaped lever; an eccentric part which rotates to push the main arm, making it swivel; an accessory such as a container with the appropriate height for pressing upward the rear part of the main arm.

7. **DEVICE FOR DISPENSING LIQUIDS** according to claim 1, **characterised in that** it can complementarily incorporate a jar with grooves at different heights allowing to insert a tray.

8. **DEVICE FOR DISPENSING LIQUIDS** according to the previous claim, **characterised in that** a part of the jar can form part of or be inserted in the piece of furniture that supports the machine in which the device is installed.

9. **DEVICE FOR DISPENSING LIQUIDS** according to claim 1, **characterised in that** the support element consists of the external lower part of the container.

10. **DEVICE FOR DISPENSING LIQUIDS** according to claims 1 to 6 **characterised in that** the scoop-shaped lever can be folded, with its shape allowing it to be adapted to that of the main arm.
